# EUROPÄISCHE PATENTANMELDUNG

(11) **EP 0 823 986 A2**
(43) Veröffentlichungstag der Anmeldung: **18.02.1998**
(21) Anmeldenummer: 97113535.5
(22) Anmeldetag: 06.08.1997
(51) Int. Cl.: A01G 9/12

(54) **Pflanzenhalter**

(30) Priorität: 15.08.1996 DE 29614710 U
(71) Anmelder: Korte-Jungermann, Hans-Werner, 47877 Willich (DE)
(72) Erfinder: Korte-Jungermann, Hans-Werner, 47877 Willich (DE)
(74) Vertreter: Bonsmann, Manfred, Dipl.-Ing.

(57) **Zusammenfassung**

Die Erfindung betrifft einen Pflanzenhalter mit mehreren im wesentlichen identisch ausgebildeten, in Gebrauchslage vertikal angeordneten Elementen (2) und wenigstens einem in Gebrauchslage horizontal angeordneten Haltering (3), bei dem lösbare Arretiereinrichtungen zur Arretierung mehrerer Vertikalelemente (2) über den Umfang des Halteringes (3) verteilt auf jeweils gleicher Höhe der Vertikalelemente vorgesehen sind. Die Vertikalelemente (2) können ein im wesentlichen rechteckförmiges Profil aufweisen. In dem wenigestens einen Haltering (3) können Ausnehmungen (10) zur Aufnahme der Vertikalelemente und auf den Seitenflächen der Vertikalelemente können Vorsprünge (12) angeordnet sein, die im montierten Zustand in korrespondierende Vertiefungen (11) in den Ausnehmungen des Halterings (3) clipsartig eingreifen.

## Beschreibung

Die Erfindung betrifft einen Pflanzenhalter mit mehreren im wesentlichen identisch ausgebildeten, in Gebrauchslage vertikal angeordneten Elementen und wenigstens einem in Gebrauchslage horizontal angeordneten Haltering.

Derartige Pflanzenhalter sind einem Pflanzgefäß zugeordnet, in dem Rank- und Kletterpflanzen angepflanzt werden. Diese wachsen entlang der Vertikalelemente und der Halteringe, wodurch sich mit der Zeit eine der äußeren Gestalt des Pflanzenhalters entsprechend begrünte, dekorative Gestaltung ergibt.

Aus der DE-GM 89 144 79 ist ein Pflanzenhalter der eingangs erwähnten Art bekannt, bei dem die aus Metall ausgebildeten Vertikalelemente und Halteringe miteinander verschweißt bzw. verschraubt sind. Der Pflanzenhalter ist zur Stabilisierung mittels Verschraubungen auf einer Grundplatte oder einem Fundament zu befestigen.

Die bekannten Pflanzenhalter werden entweder als Bausatz aus Einzelteilen oder fertig montiert angeboten. Der Zusammenbau bekannter Bausätze ist jedoch wegen erforderlicher Schraubverbindungen aufwendig und kompliziert. Werden die Pflanzenhalter fertig montiert angeboten, so treten wegen des bestimmungsgemäß großen Volumens der Pflanzenhalter hohe Verpackungs- und Transportkostene auf.

Der Erfindung liegt die Aufgabe zugrunde, einen Pflanzenhalter der eingangs genannten Art derart zu verbessern, daß dieser möglichst wenig unterschiedliche, günstig herstellbare Einzelteile mit im unmontierten Zustand geringem Transportvolumen aufweist und ohne Werkzeug in einfacher Weise montierbar ist. Weiterhin soll der Pflanzenhalter ohne Werkzeug an handelsüblichen Pflanzgefäßen befestigt werden können, wobei auf eine zusätzliche Befestigung des Pflanzenhalters auf einer Grundplatte oder einem Fundament zur Stabilisierung verzichtet werden kann.

Erfindungsgemäß ist vorgesehen, daß leicht - d.h. ohne Zuhilfenahme von Werkzeug - lösbare Arretiereinrichtungen zur Arretierung mehrerer Vertikalelemente über den Umfang des Halteringes verteilt auf jeweils gleicher Höhe der Vertikalelemente vorgesehen sind. Dadurch kann der Pflanzenhalter als Bausatz in kompakter Form angeboten und in einfacher Weise am endgültigen Aufstellungsort ohne Werkzeug montiert werden, indem die Vertikalelemente mittels der Arrretiereinrichtungen an den Halteringen befestigt werden. Sind mehrere Halteringe vorgesehen, können diese unterschiedliche, an die Form der Vertikalelemente angepaßte Durchmesser aufweisen. Die Form der Halteringe ist nicht notwendigerweise kreisförmig; es sind auch elliptische oder vieleckige Halteringe möglich.

Weiterhin kann erfindungsgemäß vorgesehen sein, daß die Vertikalelemente an einem Stirnende zum Eingreifen in ein Pflanzgefäß und zum Umgreifen des oberen Randes des Pflanzgefäßes ausgebildet sind. Dadurch wird der Pflanzenhalter ohne Verwendung von zusätzlichen Befestigungsmitteln, wie z.B. Schrauben, in dem Pflanzgefäß befestigt. Da das Pflanzgefäß mit Erde oder einem ähnlichen Pflanzennährsubstrat gefüllt wird und somit relativ schwer ist, kann auf eine zusätzliche Befestigung des Pflanzenhalters auf einem Fundament oder einer Grundplatte verzichtet werden. Das Pflanzgefäß bildet mit dem Pflanzenhalter keine feste Einheit, so daß handelsübliche Pflanzgefäße Verwendung finden können.

In weiterer Ausgestaltung der Erfindung kann vorgesehen sein, daß die Vertikalelemente ein im wesentlichen rechteckförmiges Profil aufweisen und daß die Arretiereinrichtungen derart ausgebildet sind, daß in dem wenigestens einen Haltering Ausnehmungen zur Aufnahme der Vertikalelemente angeordnet sind und daß auf den Seitenflächen der Vertikalelemente Vorsprünge angeordnet sind, die im montierten Zustand in korrespondierende Vertiefungen in den Ausnehmungen des Halterings eingreifen. Damit wird ein einfaches clipsartiges Arretieren der Vertikalelemente in den Halteringen ermöglicht. Selbstverständlich ist es alternativ möglich, die Ausnehmungen in den Vertikalelementen vorzusehen und die Halteringe in diesen Ausnehmungen zu arretieren.

In weiterer Ausgestaltung der Erfindung kann vorgesehen sein, daß die in Gebrauchslage oberen Bereiche der Vertikalelemente eine nach außen gewölbte, in etwa kugelförmige Gestalt ausbilden.

In weiterer Ausgestaltung der Erfindung kann vorgesehen sein, daß ein oder mehrere Halteringe zur Aufnahme zusätzlicher Pflanzgefäße ausgebildet sind. Dies wird zweckmäßigerweise dadurch erreicht, daß der Rand der zusätzlichen Pflanzgefäße auf dem Innenrand der entsprechenden Halteringe aufliegt.

Die Erfindung wird nachfolgend anhand eines in den Zeichnungen dargestellten Ausführungsbeispiels näher erläutert. Es zeigen:
- Fig. 1: einen erfindungsgemäßen Pflanzenhalter im montierten und begrünten Zustand;
- Fig. 2: eine Querschnittsansicht des in Fig. 1 dargestellten Pflanzenhalters, und
- Fig. 3: eine detaillierte Darstellung des erfindungsgemäßen Halterings mit Arretiereinrichtungen für die Vertikalelemente.

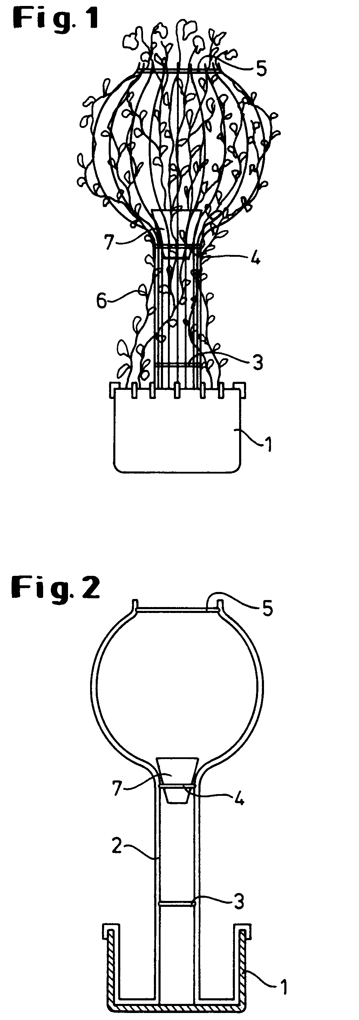

Gemäß Fig. 1 ist ein erfindungsgemäßer Pflanzenhalter im montierten und begrünten Zustand mit einem mit Erde gefüllten Pflanzgefäß 1 und in regelmäßigen Abständen auf dem Außenumfang von drei kreisförmigen Halteringen 3,4,5 angeordneten Vertikalelementen 2 dargestellt, wobei der untere Haltering 3 und der mittlere Haltering 4 jeweils einen gleichen, der obere Haltering einen größeren Durchmesser aufweisen. Die Vertikalelemente und die Halterringe werden von Pflanzen 6 umrankt. Im mittleren Haltering 4 ist ein weiteres, bepflanztes Gefäß 7 angeordnet. Die Vertikalelemente und die Halteringe sind aus Kunststoff ausgebildet, was gegenüber der Verwendung von Metall Gewichts- und Kostenvorteile mit sich bringt. Der obere Bereich der Vertikalelemente ist kugelförmig gewölbt ausgebildet, wobei am oberen Ende eine zum Einführen bzw. Herausnehmen des Gefäßes 7 ausreichend große Öffnung verbleibt.

In Fig. 2 ist eine Querschnittsansicht des in Fig. 1 dargestellten Pflanzenhalters - hier in unbepflanzter Form - dargestellt. Wie ersichtlich, erfolgt die Befestigung des Pflanzenhalters im Pflanzgefäß zum einen dadurch, daß die Vertikalelemente in das Pflanzgefäß eingreifen, so daß sie am Gefäßboden und den Gefäßinnenwänden anliegen, und zum anderen dadurch, daß die Vertikalelemente die Gefäßseitenwände umgreifen. Außerdem wird der Pflanzenhalter durch die im Pflanzgefäß befindliche Erde oder das Nährsubstrat zusätzlich gestützt.

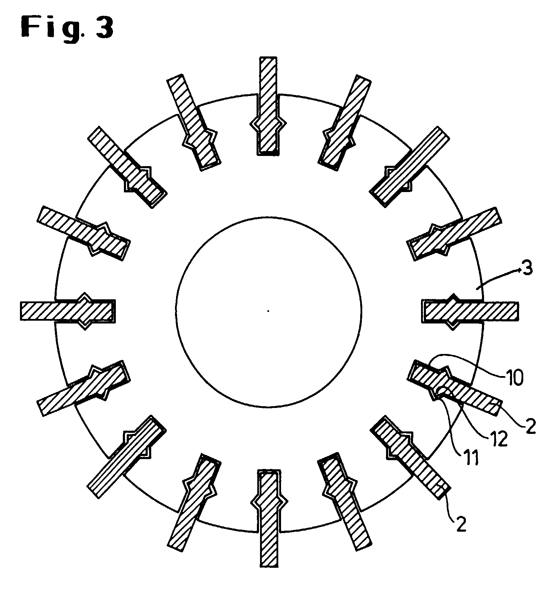

Fig. 3 zeigt eine detaillierte Darstellung eines erfindungsgemäßen Halterings mit Arretiereinrichtungen für die Vertikalelemente. Der Haltering 3 weist entlang seines Außenumfangs gleichmäßig beabstandete Ausnehmungen 10 auf, die die Vertikalelemente 2 mit rechteckigem Querschnitt aufnehmen. Auf den Seitenflächen der Vertikalelemente sind Vorsprünge 12 angeordnet, die in korrespondierende Vertiefungen 11 in den

## Patentansprüche

1. Pflanzenhalter mit mehreren im wesentlichen identisch ausgebildeten, in Gebrauchslage vertikal angeordneten Elementen und wenigstens einem in Gebrauchslage horizontal angeordneten Haltering, dadurch gekennzeichnet, daß leicht lösbare Arretiereinrichtungen zur Arretierung mehrerer Vertikalelemente (2) über den Umfang des Halteringes (3,4,5) verteilt auf jeweils gleicher Höhe der Vertikalelemente vorgesehen sind.

2. Pflanzenhalter, insbesondere nach Anspruch 1, dadurch gekennzeichnet, daß die Vertikalelemente (2) an einem Stirnende zum Eingreifen in ein Pflanzgefäß (1) und zum Umgreifen des oberen Randes des Pflanzgefäßes ausgebildet sind.

3. Pflanzenhalter nach Anspruch 1 oder 2, dadurch gekennzeichnet, daß die Vertikalelemente (2) ein im wesentlichen rechteckförmiges Profil aufweisen und daß die Arretiereinrichtungen derart ausgebildet sind, daß in dem wenigestens einen Haltering Ausnehmungen (10) zur Aufnahme der Vertikalelemente angeordnet sind und daß auf den Seitenflächen der Vertikalelemente Vorsprünge (12) angeordnet sind, die im montierten Zustand in korrespondierende Vertiefungen (11) in den Ausnehmungen des Halterings eingreifen.

4. Pflanzenhalter nach einem der Ansprüche 1 bis 3, dadurch gekennzeichnet, daß die in Gebrauchslage oben befindlichen Abschnitte der Vertikalelemente (2) eine nach außen gewölbte, in etwa kugelförmige Gestalt ausbilden.

5. Pflanzenhalter nach einem der Ansprüche 1 bis 4, dadurch gekennzeichnet, daß ein oder mehrere Halteringe (3,4,5) zur Aufnahme zusätzlicher Pflanzgefäße (8) ausgebildet sind.
